## Europäisches Patentamt

## European Patent Office

## Office européen des brevets

(11) Veröffentlichungsnummer: **0 311 559**
**A1**

(12) # EUROPÄISCHE PATENTANMELDUNG

(21) Anmeldenummer: **88810649.9**

(22) Anmeldetag: **22.09.88**

(51) Int. Cl.4: **B 23 D 21/04**

(30) Priorität: **06.10.87 CH 3894/87**

(43) Veröffentlichungstag der Anmeldung:
**12.04.89 Patentblatt 89/15**

(84) Benannte Vertragsstaaten: **CH DE IT LI**

(71) Anmelder: **Schweizerische Aluminium AG**
**CH-8212 Neuhausen am Rheinfall (CH)**

(72) Erfinder: **Jellici, Claudio**
**Pestalozzistrasse 103**
**CH-3600 Thun (CH)**

**Roder, Rudolf**
**Gwattstrasse 65c**
**CH-33645 Gwatt (CH)**

**Schafer, Victor**
**Pl. pt St.-Jean 12**
**CH-1700 Fribourg (CH)**

(54) **Verfahren zum Beschneiden eines Dosenkörpers auf eine vorgegebene Länge.**

(57) Beim Beschneiden eines über einen rotierenden Dorn (10) gestülpten Dosenkörpers (12) auf eine vorgegebene Länge (1) dringt eine Schneidvorrichtung (16) bis auf eine Dosenrestwandstärke (s) von etwa 0,08 mm in die Dosenwand (13) ein. Nach Erreichen der Dosenrestwandstärke (s) wird die Schneidvorrichtung (16) um etwa 0,5 mm parallel zur Dosenlängsachse (x) verschoben, wobei der Dosenrest (18) vom Dosenkörper (12) abgeschert wird. Hierdurch wird eine Spanbildung an der Rissstelle (E) vermieden.

Fig. 1

**EP 0 311 559 A1**

**Beschreibung**

## Verfahren zum Beschneiden eines Dosenkörpers auf eine vorgegebene Länge

Die Erfindung betrifft ein Verfahren zum Beschneiden eines über einen rotierenden Dorn gestülpten Dosenkörpers mit einer Schneidvorrichtung auf eine vorgegebene Länge.

Zur Zeit wird der zu beschneidende Dosenkörper auf einen mit einer Spreizzange versehenen Dorn gestülpt. Durch Spreizen der Spreizzange sitzt der Dosenkörper fest. Der Dorn wird dann mit dem fixierten Dosenkörper in Rotation versetzt. Von der Seite wird eine keilförmige Schneidvorrichtung, beispielsweise ein Messer aus Schnelldrehstahl oder einem Hartmetall, bis zur vorbestimmten Schnittstelle an den rotierenden Dosenkörper geführt. Die Schneidvorrichtung dringt bis zu einer Dosenrestwandstärke von 0,01 bis 0,03 mm in die Dosenwand ein. Die Dosenwandstärke beträgt selbst etwa 0,25 bis 0,45 mm. Durch die Keilwirkung der Schneidvorrichtung wird der Abfall von dem Dosenkörper getrennt. Die Schneidvorrichtung wird dann wieder von der Schnittstelle in ihre Ausgangsposition zurückgeführt. Wegen des Unrundlaufens des rotierenden Dorns, Führungsabnutzungen und/oder Vibrationen dringt die Schneidvorrichtung bei dieser sehr geringen Dosenrestwandstärke stellenweise bis zum rotierenden Dorn vor, wodurch die Schneidkante der Schneidvorrichtung beschädigt wird. Bei stumpfer Schneidkante wird der Abfall nicht mehr nur an einer sondern an verschiedenen Rissstellen vom Dosenkörper getrennt, wobei sich ein Metallfaden ausbilden kann, der entweder am Dosenkörper oder am Abfallstück hängenbleiben kann. Diese Fadenbildung ist auf jeden Fall zu vermeiden, da es vorkommen kann, dass der Faden zwischen die Innenwand des Dosenkörpers und den Dorn gelangt und dort festgepresst wird. Es kann auch zu Eindrücken an der Doseninnenwand kommen, was dazu führt, dass der Dosenkörper dann als Ausschuss deklariert werden muss. Bei der Weiterbehandlung des Dosenkörpers, beispielsweise beim Lackieren der Innenfläche, wird bei eingezogenem Metallfaden nicht die gesamte Innenfläche geschützt, was zu Blasenbildung und/oder Porosität führen kann. Beschädigtes Schneidewerkzeug führt zu häufigem Wechsel, der recht zeitaufwendig ist und zu Produktionsausfall führt. In den Dosenkörper eingezogene, nicht bemerkte Metallfäden führen in der Folge zu Ausschuss. Lässt man anderseits die Schneidvorrichtung bis auf eine Dosenrestwandstärke von grösser als 0,03 mm eindringen, dann wird der Abfall nicht mehr vom Dosenkörper getrennt.

Angesichts dieser Gegebenheiten haben sich die Erfinder das Ziel gesetzt, ein Verfahren der eingangs erwähnten Art zu schaffen, bei dem die Schneidvorrichtung nicht mehr beschädigt und eine Metallfadenbildung an der Rissstelle vermieden wird.

Zur Lösung der Aufgabe führt, dass die Schneidvorrichtung bis zu einer Dosenrestwandstärke in die Dosenwand eingeführt und zur Trennung des Dosenrests vom Dosenkörper in Richtung parallel zur Dosenlängsachse verschoben wird. Bevorzugt wird die Schneidvorrichtung bis zu einer Dosenrestwandstärke von 0,04 bis 0,08 mm in die Dosenwand eingeführt. Dadurch wird die Schneidkante der Trennvorrichtung nicht mehr beschädigt. Um aber den Dosenrest vom Dosenkörper trennen zu können, wird die Schneidvorrichtung nach dem Einführen in den rotierenden Dosenkörper bis auf die Dosenrestwandstärke vorzugsweise um 0,3 bis 0,7 mm, insbesondere um 0,5 mm, parallel zur Dosenlängsachse verschoben. Selbstverständlich kann sich auch der rotierende Dorn parallel zum feststehenden Schneidwerkzeug bewegen. Hierdurch wird der Dosenrest in Bewegungsrichtung der Schneidvorrichtung oder des rotierenden Dorns verschoben und die Trennung erfolgt an nur einer Rissstelle. Nach der Trennung werden Schneidvorrichtung oder rotierender Dorn wieder in die Ausgangslage zurückgeführt. Wegen der grossen Restwandstärke der Dose und nur einem Rissansatz wird die Schneidvorrichtung nicht mehr beschädigt und es kann sich zudem kein Metallfaden an der Schnittstelle ausbilden.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in:

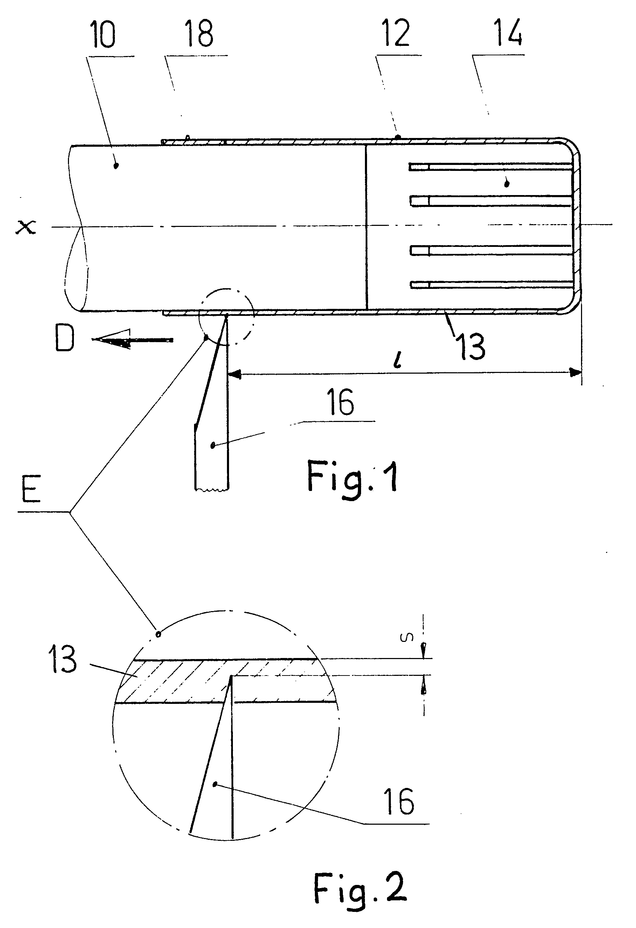

Fig. 1 einen vertikalen Teilschnitt eines über einen Dorn gestülpten Dosenkörpers mit Schneidvorrichtung;

Fig. 2 eine vergrösserte Darstellung der Schneidvorrichtung im Bereich der Trennstelle.

Ueber einen rotierenden Dorn 10 ist ein auf eine Länge 1 zu schneidender Dosenkörper 12 gestülpt, der über eine Spreizzange 14 festgeklemmt ist. Eine als keilförmig zugespitztes Messer ausgebildete Schneidvorrichtung 16 wird dann bei der vorgegebenen Länge 1 des Dosenkörpers in die Dosenwand 13 des rotierenden Dosenkörpers 12 geführt bis eine vorgegebene Dosenrestwandstärke s erreicht ist. Dann wird die Schneidvorrichtung 16 in Richtung D parallel zur Dosenlängsachse x bewegt, wobei an der Stelle E der Dosenrest 18 vom Dosenkörper 12 getrennt wird. Anschliessend wird die Schneidvorrichtung 16 wieder in die Ausgangsposition zurückgeführt.

Gegenüber herkömmlichen Trennverfahren weist das erfindungsgemässe Trennverfahren die folgenden Vorteile auf:

- Die Standzeiten der Schneidvorrichtung werden um den Faktor 4 bis 10 Mal verlängert
- Die Produktion kann um etwa 5% gesteigert werden
- Die Ausschussrate wird um 1-2% verringert
- Das Einrichten des Dosenkörpers auf dem Dorn verlangt weniger Sorgfalt
- Die Ausbildung eines Metallfadens an der Trennstelle wird unterbunden

**Patentansprüche**

1. Verfahren zum Beschneiden eines über einen rotierenden Dorn (10) gestülpten Dosenkörpers(l2) mit einer Schneidvorrichtung (16) auf eine vorgegebene Länge (1), dadurch gekennzeichnet,
dass die Schneidvorrichtung (10) bis zu einer Dosenrestwandstärke (s) in die Dosenwand (13) eingeführt und zur Trennung des Dosenrests (18) vom Dosenkörper (12) in Richtung (D) parallel zur Dosenlängsachse (x) verschoben wird.

2. Verfahren nach Anspruch 1, dadurch gekennzeichnet, dass als Schneidvorrichtung (16) ein keilförmig zugespitztes Messer aus Schnelldrehstahl, Schneidstahl oder einem Hartmetall verwendet wird.

3. Verfahren nach einem der Ansprüche 1 bis 2, dadurch gekennzeichnet, dass die Schneidvorrichtung (16) bis zu einer Dosenrestwandstärke (s) von 0,04 bis 0,08 mm, vorzugsweise 0,08 mm, in die Dosenwand (13) eingeführt wird.

4. Verfahren nach einem der Ansprüche 1 bis 3, dadurch gekennzeichnet, dass die Schneidvorrichtung (16) nach Erreichen der Dosenrestwandstärke (s) um 0,3 bis 0,7 mm, vorzugsweise um 0,5 mm, parallel zur Dosenlängsachse (x) verschoben wird.

5. Verfahren nach einem der Ansprüche 1 bis 3, dadurch gekennzeichnet, dass der auf dem Dorn (10) festsitzende Dosenkörper (12) bis zur Dosenrestwandstärke (s) an die Schneidvorrichtung (16) geführt und um 0,3 bis 0,7 mm, vorzugsweise um 0,5 mm, parallel zur Dosenlängsachse (x) verschoben wird.

10   18                    12        14

x

D

16

Fig.1

E

13

S

16

13

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | RUSSIAN ENGINEERING JOURNAL, Band 51, Nr. 1, Januar 1971, Seiten 66,67, Melton Mowbay, GB; A.E. MATYASH et al.: "High-quality tube cutting attachment" * Insgesamt * --- | 1,2,5 | B 23 D 21/04 |
| Y | US-A-3 138 308 (OAKLEY) * Insgesamt * --- | 1,2,5 | |
| A | US-A-2 350 535 (SARULLA) ----- | | |

| | RECHERCHIERTE SACHGEBIETE (Int. Cl.4) |
|---|---|
| | B 23 D |
| | B 26 D |

Der vorliegende Recherchenbericht wurde für alle Patentansprüche erstellt

| Recherchenort | Abschlußdatum der Recherche | Prüfer |
|---|---|---|
| DEN HAAG | 14-12-1988 | BERGHMANS H.F. |